# EUROPEAN PATENT APPLICATION

(11) **EP 4 503 616 A1**
(43) Date of publication of application: **05.02.2025**
(21) Application number: 23838464.8
(22) Date of filing: 03.04.2023
(51) Int. Cl.: H04N 21/234

(54) **METHOD AND APPARATUS FOR CONTROLLING TRANSMISSION OF VIDEO STREAM, AND DEVICE AND MEDIUM**

(30) Priority: 12.07.2022 CN 202210818435
(71) Applicant: Tencent Technology (Shenzhen) Company Limited, Shenzhen, Guangdong 518057 (CN)
(72) Inventor: JIA, Yuhang, Shenzhen, Guangdong 518057 (CN); LEI, Yixue, Shenzhen, Guangdong 518057 (CN); ZHANG, Yunfei, Shenzhen, Guangdong 518057 (CN)
(74) Representative: EP&C
(86) International application number: PCT/CN2023/086033
(87) International publication number: WO 2024/011962

(57) **Abstract**

Disclosed in the embodiments of the present application are a method and apparatus for controlling the transmission of a video stream, and a device and a medium, which can be applied in various scenarios such as intelligent transportation, assisted driving, cloud technology and artificial intelligence. The method for controlling the transmission of a video stream comprises: receiving a video stream, which is sent by a stream pusher, and detecting network index information of the video stream during the receiving process; on the basis of the network index information, determining a stream pulling code rate which matches the network index information; generating a stream pulling request on the basis of the stream pulling code rate, wherein the stream pulling request is used for instructing the stream pusher to perform stream pushing processing on the basis of the stream pulling code rate; and sending the stream pulling request to the stream pusher. By means of the technical solution of the present application, the transmission of a video stream is adapted to a network change, thereby realizing rational control over the transmission of the video stream.

## Description

### RELATED APPLICATION

This disclosure claims priority to Chinese Patent Application No. 202210818435.1, entitled "METHOD AND APPARATUS FOR CONTROLLING VIDEO STREAM TRANSMISSION, DEVICE, AND MEDIUM" filed on July 12, 2022.

### FIELD OF THE TECHNOLOGY

This disclosure relates to the field of communication technologies, and specifically, to a method for controlling video stream transmission, an apparatus for controlling video stream transmission, an electronic device, and a computer-readable medium.

### BACKGROUND OF THE DISCLOSURE

Currently, video stream transmission may be used in various scenarios such as smart transportation, assisted driving, a cloud technology, and artificial intelligence. For example, in the assisted driving scenario, an acquisition party may push acquired video streams related to vehicles on a road to a pulling terminal, so that the pulling terminal can perform corresponding processing based on the received video streams to achieve assisted driving.

During video stream transmission, a network usually changes, and the network change affects the video stream transmission to a certain extent. Therefore, how to properly control the video stream transmission to be adapted to the network change is an issue that needs to be solved urgently.

### SUMMARY

Embodiments of this disclosure provide a method and an apparatus for controlling video stream transmission, a device, and a medium, which makes video stream transmission adapted to a network change at least to a certain extent, so that proper control of the video stream transmission is achieved.

According to a first aspect, an embodiment of this disclosure provides a method for controlling video stream transmission, applied to a pulling terminal, the method including: receiving a video stream transmitted by a pushing party, and detecting network indicator information of the video stream in the receiving process; determining a pulling bit rate matching the network indicator information based on the network indicator information; generating a pulling request based on the pulling bit rate, the pulling request being configured for indicating the pushing party to perform pushing processing based on the pulling bit rate; and transmitting the pulling request to the pushing party.

According to a second aspect, an embodiment of this disclosure provides a method for controlling video stream transmission, applied to a pushing terminal, the method including: pushing a video stream to a video stream server, to cause the video stream server to push the video stream to a pulling terminal; receiving a pulling request transmitted by the pulling terminal, the pulling request carrying a pulling bit rate, and the pulling bit rate being determined based on network indicator information detected during receiving of the video stream by the pulling terminal; and performing pushing processing to the video stream server based on the pulling bit rate, to cause the video stream server to push the video stream corresponding to the pulling bit rate to the pulling terminal.

According to a third aspect, an embodiment of this disclosure provides a method for controlling video stream transmission, applied to a video stream server, the method including: receiving a video stream transmitted by a pushing terminal, and pushing the video stream to a pulling terminal; receiving a pulling request transmitted by the pulling terminal, the pulling request carrying a pulling bit rate, and the pulling bit rate being determined based on network indicator information detected during receiving of the video stream by the pulling terminal; and performing pushing processing to the pulling terminal based on the pulling bit rate.

According to a fourth aspect, an embodiment of this disclosure provides an apparatus for controlling video stream transmission, applied to a pulling terminal, the apparatus including: a receiving module, configured to receive a video stream transmitted by a pushing party, and detect network indicator information of the video stream in the receiving process; a determining module, configured to determine a pulling bit rate matching the network indicator information based on the network indicator information; a generation module, configured to generate a pulling request based on the pulling bit rate, the pulling request being configured for indicating the pushing party to perform pushing processing based on the pulling bit rate; and a transmission module, configured to transmit the pulling request to the pushing party.

According to a fifth aspect, an embodiment of this disclosure provides an apparatus for controlling video stream transmission, applied to a pushing terminal, the apparatus including: a pushing module, configured to push a video stream to a video stream server, to cause the video stream server to push the video stream to a pulling terminal; and a receiving module, configured to receive a pulling request transmitted by the pulling terminal, the pulling request carrying a pulling bit rate, and the pulling bit rate being determined based on network indicator information detected during receiving of the video stream by the pulling terminal; and the pushing module being further configured to perform pushing processing to the video stream server based on the pulling bit rate, to cause the video stream server to push the video stream corresponding to the pulling bit rate to the pulling terminal.

According to a sixth aspect, an embodiment of this disclosure provides an apparatus for controlling video stream transmission, applied to a video stream server, the apparatus including module, configured to: a pushing module, configured to receive a video stream transmitted by a pushing terminal, and push the video stream to a pulling terminal; and a receiving module, configured to receive a pulling request transmitted by the pulling terminal, the pulling request carrying a pulling bit rate, and the pulling bit rate being determined based on network indicator information detected during receiving of the video stream by the pulling terminal; and the pushing module being further configured to perform pushing processing to the pulling terminal based on the pulling bit rate.

According to a seventh aspect, an embodiment of this disclosure provides an electronic device, including one or more processors; and a memory, configured to store one or more programs, the one or more programs, when executed by the one or more processors, causing the electronic device to implement the foregoing method for controlling video stream transmission.

According to an eighth aspect, an embodiment of this disclosure provides a computer-readable medium, having a computer program stored therein, the computer program, when executed by a processor, implementing the foregoing method for controlling video stream transmission.

According to a ninth aspect, an embodiment of this disclosure provides a computer program product, including computer instructions, the computer instructions, when executed by a processor, implementing the foregoing method for controlling video stream transmission.

In technical solutions provided in some embodiments of this disclosure:

A pulling terminal detects network indicator information of a video stream in a receiving process, and may determine a pulling bit rate matching the network indicator information based on the network indicator information, to transmit the pulling bit rate to a pushing party in a form of a pulling request, so that the pushing party may perform pushing processing based on the pulling bit rate. In this way, video stream transmission can be adapted to a network change, so that proper control of the video stream transmission is achieved. In addition, a pulling terminal side performs logic processing of determining the pulling bit rate matching the network indicator information based on the network indicator information, so that processing pressure on a server side can be reduced, and resource consumption caused by unnecessary message transmission can also be avoided.

By receiving a pulling request carrying a pulling bit rate transmitted by a pulling terminal, a pushing terminal may perform pushing processing to the pulling terminal based on the pulling bit rate, in other words, video stream pushing performed by the pushing terminal to the pulling terminal is adapted to a network change, so that proper control of performing pushing to the pulling terminal is achieved.

By receiving a pulling request carrying a pulling bit rate transmitted by a pulling terminal, a video stream server may perform pushing processing to the pulling terminal based on the pulling bit rate, in other words, video stream pushing performed by the video stream server to the pulling terminal is adapted to a network change, so that proper control of performing pushing to the pulling terminal is achieved.

The foregoing general descriptions and the following detailed descriptions are merely for illustration and explanation purposes and are not intended to limit this disclosure.

### BRIEF DESCRIPTION OF THE DRAWINGS

FIG. 1 is a schematic diagram of an exemplary implementation environment to which the technical solutions in some embodiments of this disclosure may be applied.
FIG. 2 is a flowchart of a method for controlling video stream transmission according to an exemplary embodiment of this disclosure.
FIG. 3 is a flowchart of a method for controlling video stream transmission according to another exemplary embodiment of this disclosure.
FIG. 4 is a flowchart of a method for controlling video stream transmission according to another exemplary embodiment of this disclosure.
FIG. 5 is a flowchart of a method for controlling video stream transmission according to another exemplary embodiment of this disclosure.
FIG. 6 is a flowchart of a method for controlling video stream transmission according to another exemplary embodiment of this disclosure.
FIG. 7 is a flowchart of a method for controlling video stream transmission according to another exemplary embodiment of this disclosure.
FIG. 8 is a flowchart of a method for controlling video stream transmission according to another exemplary embodiment of this disclosure.
FIG. 9 is a flowchart of a method for controlling video stream transmission according to an exemplary embodiment of this disclosure.
FIG. 10 is a flowchart of a method for controlling video stream transmission according to another exemplary embodiment of this disclosure.
FIG. 11 is a flowchart of a method for controlling video stream transmission according to an exemplary embodiment of this disclosure.
FIG. 12 is a flowchart of a method for controlling video stream transmission according to another exemplary embodiment of this disclosure.
FIG. 13 is a flowchart of a method for controlling video stream transmission according to another exemplary embodiment of this disclosure.
FIG. 14 is a flowchart of a method for controlling video stream transmission according to another exemplary embodiment of this disclosure.
FIG. 15 is a schematic diagram of an exemplary implementation environment to which the technical solutions in some embodiments of this disclosure may be applied.
FIG. 16 is a flowchart of a method for controlling video stream transmission according to an exemplary embodiment of this disclosure.
FIG. 17 is a flowchart of a method for controlling video stream transmission according to an exemplary embodiment of this disclosure.
FIG. 18 is a block diagram of an apparatus for controlling video stream transmission according to some embodiments of this disclosure.
FIG. 19 is a block diagram of an apparatus for controlling video stream transmission according to some embodiments of this disclosure.
FIG. 20 is a block diagram of an apparatus for controlling video stream transmission according to some embodiments of this disclosure.
FIG. 21 is a schematic structural diagram of a computer system of an electronic device configured to implement some embodiments of this disclosure.

### DESCRIPTION OF EMBODIMENTS

To describe exemplary embodiments in detail herein, examples of the exemplary embodiments are shown in the accompanying drawings. When the following descriptions are made with reference to the accompanying drawings, unless otherwise indicated, the same numbers in different accompanying drawings represent the same or similar elements. The following implementations described in the following exemplary embodiments do not represent all implementations that are same as this disclosure. On the contrary, the implementations are merely examples of apparatuses and methods that are described in detail in the appended claims and that are same as some aspects of this disclosure.

The block diagrams shown in the accompanying drawings are merely functional entities and do not necessarily correspond to physically separate entities. To be specific, the functional entities may be implemented in a software form, or in one or more hardware modules or integrated circuits, or in different networks and/or processor apparatuses and/or microcontroller apparatuses.

The flowcharts shown in the accompanying drawings are merely illustrative, do not necessarily include all content and operations, and also are not necessarily performed in the described order. For example, some operations may further be decomposed, and some operations may be merged or partially merged. As a result, an actual execution order may be changed according to an actual situation.

"Plurality of" mentioned in this disclosure means two or more. "And/or" describes an association relationship for describing associated objects and represents that three relationships may exist. For example, A and/or B may represent the following three cases: Only A exists, both A and B exist, and only B exists. A character "/" generally indicates an "or" relationship between associated objects.

Currently, during video stream transmission, a network usually changes, and the network change affects the video stream transmission to a certain extent. However, in related arts, for how to properly control the video stream transmission to be adapted to the network change, there is no clear solution.

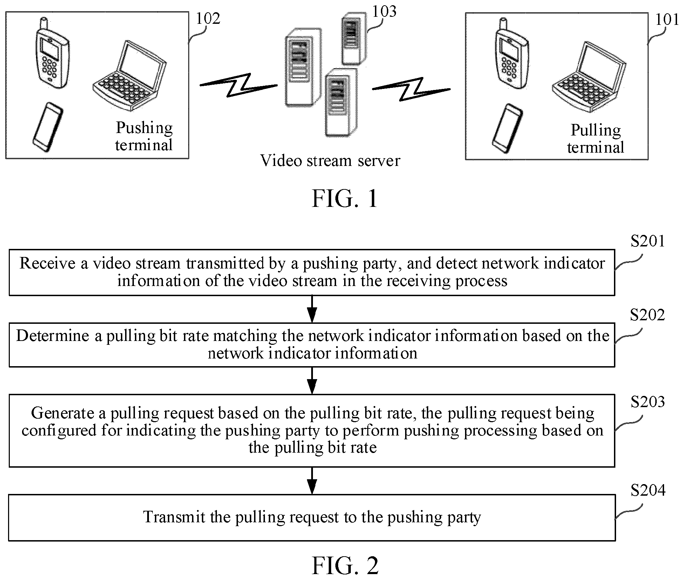

FIG. 1 is a schematic diagram of an implementation environment according to this disclosure. The implementation environment mainly includes a pulling terminal 101, a pushing terminal 102, and a video stream server 103. The pulling terminal 101, the pushing terminal 102, and the video stream server 103 may communicate through a wired or wireless network.

The pulling terminal 101 and/or the pushing terminal 102 may include but is not limited to a smart phone, a tablet, a notebook computer, a computer, an intelligent voice interaction device, a smart home appliance, an in-vehicle terminal, an aircraft, or the like.

The video stream server 103 may be a server that provides various services, which may be an independent physical server, or may be a server cluster or a distributed system formed by a plurality of physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. This is not limited in some embodiments of this disclosure.

Quantities of pulling terminals 101, pushing terminals 102, and video stream servers 103 in FIG. 1 are merely illustrative. According to actual needs, there may be any quantity of pulling terminals 101, pushing terminals 102, or video stream servers 103.

In some embodiments of this disclosure, a method for controlling video stream transmission may be performed by the pulling terminal 101. In this case, the pulling terminal 101 is used as a pulling party.

For example, the pulling terminal 101 receives a video stream transmitted by a pushing party, and detects network indicator information of the video stream in the receiving process; determines a pulling bit rate matching the network indicator information based on the network indicator information; generates a pulling request based on the pulling bit rate, the pulling request being configured for indicating the pushing party to perform pushing processing based on the pulling bit rate; and transmits the pulling request to the pushing party.

In some embodiments of this disclosure, a method for controlling video stream transmission may be performed by the pushing terminal 102. In this case, the pushing terminal 102 is used as a pushing party.

For example, the pushing terminal 102 pushes a video stream to a video stream server, to cause the video stream server to push the video stream to a pulling terminal; receives a pulling request transmitted by the pulling terminal, the pulling request carrying a pulling bit rate, and the pulling bit rate being determined based on network indicator information detected during receiving of the video stream by the pulling terminal; and performs pushing processing to the video stream server based on the pulling bit rate, to cause the video stream server to push the video stream corresponding to the pulling bit rate to the pulling terminal.

In some embodiments of this disclosure, a method for controlling video stream transmission may be performed by the video stream server 103. In this case, the video stream server 103 is used as a pushing party.

For example, the video stream server 103 receives a video stream transmitted by a pushing terminal, and pushes the video stream to a pulling terminal; receives a pulling request transmitted by the pulling terminal, the pulling request carrying a pulling bit rate, and the pulling bit rate being determined based on network indicator information detected during receiving of the video stream by the pulling terminal; and performs pushing processing to the pulling terminal based on the pulling bit rate.

The technical solution in the embodiment shown in FIG. 1 may be used in various scenarios, including but not limited to smart transportation, assisted driving, a cloud technology, artificial intelligence, and the like. In various embodiments, the technical solution may be correspondingly adjusted accordingly.

For example, if the technical solution is used in the smart transportation or assisted driving scenario, the pushing terminal 102 may be an in-vehicle terminal, a navigation terminal, or the like, and the pulling terminal 101 may be a computer, a smart phone, a tablet, a notebook computer, or the like. For example, the computer receives a video stream transmitted by the in-vehicle terminal, and detects network indicator information of the video stream in the receiving process; determines a pulling bit rate matching the network indicator information based on the network indicator information, to generate a pulling request based on the pulling bit rate; and transmits the pulling request to the in-vehicle terminal. Correspondingly, the in-vehicle terminal may receive the pulling request transmitted by the computer, and perform pushing processing to the video stream server based on the pulling bit rate carried in the pulling request, to cause the video stream server to push the video stream corresponding to the pulling bit rate to the computer. Correspondingly, the computer may receive the video stream corresponding to the pulling bit rate carried in the pulling request from the video stream server.

For example, if the technical solution is used in the cloud technology or artificial intelligence scenario, the video stream server 103 may be a server in a cloud. For example, the computer receives a video stream transmitted by the in-vehicle terminal, and detects network indicator information of the video stream in the receiving process; determines a pulling bit rate matching the network indicator information based on the network indicator information, to generate a pulling request based on the pulling bit rate; and transmits the pulling request to the in-vehicle terminal. Correspondingly, the cloud server may receive the pulling request transmitted by the computer, and perform pushing processing to the computer based on the pulling bit rate. Correspondingly, the computer may receive the video stream corresponding to the pulling bit rate carried in the pulling request from the cloud server.

Data related to an object, for example, the network indicator information, is involved in various implementations of this disclosure. When some embodiments of this disclosure are applied to a specific product or technology, the object's permission or consent needs to be obtained, and collection, use, and processing of the relevant data need to comply with relevant laws, regulations, and standards of relevant countries and regions.

Various implementation details of the technical solutions in some embodiments of this disclosure are described below in detail.

FIG. 2 is a flowchart of a method for controlling video stream transmission according to some embodiments of this disclosure. The method for controlling video stream transmission may be performed by a pulling terminal 101 used as a pulling party. As shown in FIG. 2, the method for controlling video stream transmission includes at least S201 to S204. Detailed descriptions are as follows.

S201: Receive a video stream transmitted by a pushing party, and detect network indicator information of the video stream in the receiving process.

The video stream in this embodiment of this disclosure may be a video stream generated in any scenario, including but not limited to a video stream generated by a live streaming terminal in a live streaming scenario, a video stream (which may be a video stream that corresponds to a road image captured by a camera and that is transmitted to an in-vehicle terminal) generated by the in-vehicle terminal in a smart transportation or assisted driving scenario, or the like.

The pushing party in this embodiment of this disclosure includes but is not limited to a pushing terminal, a video stream server, or the like. The pushing terminal is a real generator/source of the video stream. For example, in a live streaming scenario, the pushing terminal is a live streaming terminal corresponding to an anchor. As the live streaming progresses, the live streaming terminal generates corresponding video streams. The video stream server is an intermediary that needs to be passed through when the pushing terminal transmits the video stream to the pulling terminal. To be specific, the pushing terminal generates the video stream, and then transmits the video stream to the video stream server; and the video stream server transmits the received video stream to the pulling terminal. For example, based on the foregoing example, the live streaming terminal generates the video stream, and then transmits the video stream to the video stream server; and the video stream server transmits the received video stream to the pulling terminal.

Correspondingly, the pulling terminal in this embodiment of this disclosure is the pulling party, which is a party that receives the video stream. For example, based on the foregoing example, in the live streaming scenario, the pulling terminal is a viewing terminal corresponding to a viewer that watches live streaming. To be specific, the live streaming terminal generates the video stream, and then transmits the video stream to the video stream server; and the video stream server transmits the received video stream to the viewing terminal, so that the viewer can watch content broadcast by the anchor through the video stream pulled by the viewing terminal.

There are usually a plurality of video stream servers, where any one or more of the plurality of video stream servers may correspond to the pulling terminal. For example, there are three video stream servers in total, where two video stream servers are cloud servers, and one server is a physical server corresponding to the pulling terminal. The network indicator information in this embodiment of this disclosure is information related to a network indicator, where the network indicator is an indicator that can reflect network quality, including but not limited to a delay, a packet loss rate, a throughput, and a jank rate.

S202: Determine a pulling bit rate matching the network indicator information based on the network indicator information.

In this embodiment of this disclosure, after detecting the network indicator information of the video stream in the receiving process, the pulling terminal may determine the pulling bit rate matching the network indicator information based on the network indicator information.

In this embodiment of this disclosure, the pulling bit rate is a bit rate that is determined when the pulling terminal performs pulling to the pushing party and that is adapted to a current network change, where the bit rate represents a quantity of bits transmitted per unit time, in bit/s or bps; kbit/s or kbps, where k=1000; or Mbps, where M=1000000. A higher bit rate indicates more pieces of data transmitted per second and clearer image quality, and a larger encoded file correspondingly. On the contrary, a lower bit rate indicates fewer pieces of data transmitted per second and more blurry image quality, and a smaller encoded file correspondingly.

S203: Generate a pulling request based on the pulling bit rate, the pulling request being configured for indicating the pushing party to perform pushing processing based on the pulling bit rate.

In this embodiment of this disclosure, after determining the pulling bit rate matching the network indicator information based on the network indicator information, the pulling terminal may generate the pulling request based on the pulling bit rate, to indicate, through the pulling request, the pushing party to perform pushing processing based on the pulling bit rate. For that the pulling party performs pushing processing based on the pulling bit rate, refer to detailed descriptions in the following embodiments.

S204: Transmit the pulling request to the pushing party.

In this embodiment of this disclosure, after generating the pulling request based on the pulling bit rate, the pulling terminal may transmit the pulling request to the pushing party.

In this embodiment of this disclosure, a pulling terminal detects network indicator information of a video stream in a receiving process, and may determine a pulling bit rate matching the network indicator information based on the network indicator information, to transmit the pulling bit rate to a pushing party in a form of a pulling request, so that the pushing party may perform pushing processing based on the pulling bit rate. In this way, video stream transmission can be adapted to a network change, so that proper control of the video stream transmission is achieved. In addition, a pulling terminal side performs logic processing of determining the pulling bit rate matching the network indicator information based on the network indicator information, so that processing pressure on a server side can be reduced, and resource consumption caused by unnecessary message transmission can also be avoided.

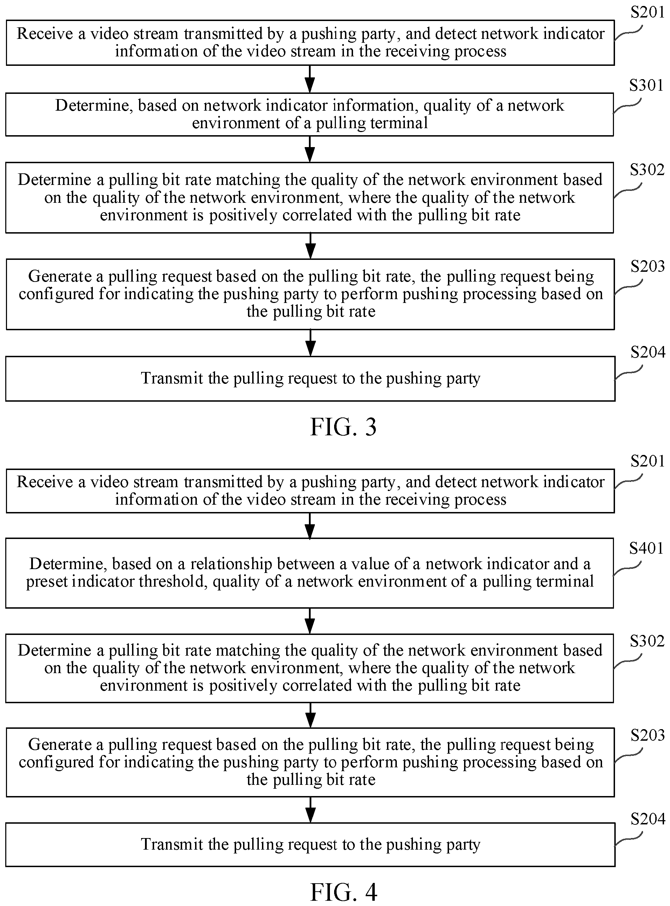

In some embodiments of this disclosure, another method for controlling video stream transmission is provided. The method for controlling video stream transmission may be performed by a pulling terminal 101 used as a pulling party. As shown in FIG. 3, the method for controlling video stream transmission may include S301, S302, S201, S203, and S204.

Detailed descriptions of S301 and S302 are as follows.

S301: Determine, based on network indicator information, quality of a network environment of the pulling terminal.

As described in the foregoing embodiment, the network indicator may reflect the network quality. Therefore, in this embodiment of this disclosure, the quality of the network environment of the pulling terminal may be determined based on the detected network indicator information.

S302: Determine a pulling bit rate matching the quality of the network environment based on the quality of the network environment, where the quality of the network environment is positively correlated with the pulling bit rate.

In this embodiment of this disclosure, after determining the quality of the network environment of the pulling terminal based on the network indicator information, the pulling terminal may determine the pulling bit rate matching the quality of the network environment based on the quality of the network environment, to obtain a pulling bit rate adapted to a current network change.

The quality of the network environment is positively correlated with the pulling bit rate. To be specific, better quality of the network environment indicates a larger determined pulling bit rate. On the contrary, poorer quality of the network environment indicates a smaller determined pulling bit rate. For detailed descriptions of S201, S203, and S204 shown in FIG. 3, refer to S201, S203, and S204 shown in FIG. 2. Details are not described herein again.

In this embodiment of this disclosure, a pulling terminal determines quality of a network environment of the pulling terminal based on network indicator information, and may rapidly determine a pulling bit rate matching the quality of the network environment based on the quality of the network environment. The implementation process is simple, and is applicable to many application scenarios.

In some embodiments of this disclosure, another method for controlling video stream transmission is provided. The method for controlling video stream transmission may be performed by a pulling terminal 101 used as a pulling party. As shown in FIG. 4, the method for controlling video stream transmission may include S401, S302, S201, S203, and S204. Network indicator information includes a value of a network indicator.

Detailed descriptions of S401 are as follows.

S401: Determine, based on a relationship between the value of the network indicator and a preset indicator threshold, quality of a network environment of the pulling terminal.

In this embodiment of this disclosure, the value of the network indicator is configured for indicating a size of the network indicator, and the size of the network indicator is related to a unit of the network indicator and a value before the unit. For example, a bit rate is in bit/s or bps; kbit/s or kbps, where k=1000; or Mbps, where M=1000000. A larger unit indicates a greater bit rate, for example, 10 Mbps>10 kbps>10 bps. Alternatively, when units are the same, a greater value before the unit indicates a greater bit rate, for example, 10 Mbps>5 Mbps.

For some network indicators, a larger network indicator indicates poorer network quality. On the contrary, a smaller network indicator indicates better network quality. For example, for a delay, 100 ms>10 ms, where network quality indicated by 100 ms is poorer than network quality indicated by 10 ms. For some network indicators, a larger network indicator indicates better network quality. On the contrary, a smaller network indicator indicates poorer network quality. For example, for a bit rate, 10 Mbps>5 Mbps, where network quality indicated by 10 Mbps is better than network quality indicated by 5 Mbps.

In some embodiments of this disclosure, the network indicator information includes a plurality of values of the network indicator; and the determining, based on a relationship between the value of the network indicator and a preset indicator threshold, quality of a network environment of the pulling terminal may at least include:
detecting a relationship between each of the plurality of values of the network indicator and the preset indicator threshold, to obtain a first detection result; and
determining, if the first detection result indicates that the plurality of values include a specified quantity of values greater than the preset indicator threshold, that the network environment of the pulling terminal is of first-level quality; or
determining, if the first detection result indicates that the plurality of values do not include the specified quantity of values greater than the preset indicator threshold, that the network environment of the pulling terminal is of second-level quality, where the first-level quality is lower than the second-level quality.

In this embodiment, to more accurately determine the quality of the network environment of the pulling terminal, the pulling terminal detects a plurality of values of a same network indicator of the video stream in a preset time period of the receiving process. Therefore, the detected network indicator information includes the plurality of values of the network indicator.

In this embodiment, the pulling terminal detects the relationship between each of the plurality of values of the network indicator and the preset indicator threshold, to obtain the first detection result; and determines the quality of the network environment of the pulling terminal based on the first detection result.

For determining the quality of the network environment of the pulling terminal based on the first detection result, there are at least the following determining cases.

Case 1: If the first detection result indicates that the plurality of values include a specified quantity of values greater than the preset indicator threshold, it is determined that the network environment of the pulling terminal is of the first-level quality, in other words, it is determined that the quality of the network environment of the pulling terminal is poor.

Case 2: If the first detection result indicates that the plurality of values do not include the specified quantity of values greater than the preset indicator threshold, it is determined that the network environment of the pulling terminal is of the second-level quality, in other words, it is determined that the quality of the network environment of the pulling terminal is good.

For example, the plurality of detected values of the network indicator are set to a1, a2, a3, and a4, and the preset indicator threshold is set to a0. In this case, each of a1, a2, a3, and a4 is compared with a0, to obtain the first detection result. In addition, in the first detection result, it is assumed that a1>a0, a2>a0, a3>a0, and a4<a0; and the specified quantity is set to 2. Apparently, in this case, the first detection result indicates that the plurality of values include the specified quantity of values greater than the preset indicator threshold, and it may be determined that the network environment of the pulling terminal is of the first-level quality. Alternatively, in the first detection result, it is assumed that a1<a0, a2<a0, a3>a0, and a4<a0; and the specified quantity is set to 2. Apparently, in this case, the first detection result indicates that the plurality of values do not include the specified quantity of values greater than the preset indicator threshold, and it may be determined that the network environment of the pulling terminal is of the second-level quality.

In this way, by implementing this embodiment and using the plurality of values of the network indicator, accuracy of determining the quality of the network environment of the pulling terminal can be improved, so that accuracy of determining the pulling bit rate can be improved.

In some embodiments of this disclosure, the network indicator information includes a plurality of values of the network indicator; and the determining, based on a relationship between the value of the network indicator and a preset indicator threshold, quality of a network environment of the pulling terminal may at least include:
performing summation and averaging operations on the plurality of values, to obtain an average value;
detecting a relationship between the average value and the preset indicator threshold, to obtain a second detection result; and
determining, if the second detection result indicates that the average value is greater than the preset indicator threshold, that the network environment of the pulling terminal is of first-level quality; or
determining, if the second detection result indicates that the average value is less than or equal to the preset indicator threshold, that the network environment of the pulling terminal is of second-level quality, where the first-level quality is lower than the second-level quality.

In this embodiment, to more accurately determine the quality of the network environment of the pulling terminal, the pulling terminal detects a plurality of values of a same network indicator of the video stream in a preset time period of the receiving process. Therefore, the detected network indicator information includes the plurality of values of the network indicator.

In this embodiment, the pulling terminal performs summation and averaging operations on the plurality of values, to obtain the average value; detects the relationship between the average value and the preset indicator threshold, to obtain the second detection result; and determines the quality of the network environment of the pulling terminal based on the second detection result.

For determining the quality of the network environment of the pulling terminal based on the second detection result, there are at least the following determining cases.

Case 1: If the second detection result indicates that the average value is greater than the preset indicator threshold, it is determined that the network environment of the pulling terminal is of the first-level quality, in other words, it is determined that the quality of the network environment of the pulling terminal is poor.

Case 2: If the second detection result indicates that the average value is less than or equal to the preset indicator threshold, it is determined that the network environment of the pulling terminal is of the second-level quality, in other words, it is determined that the quality of the network environment of the pulling terminal is good.

For example, the plurality of detected values of the network indicator are set to a1, a2, a3, and a4, to obtain the average value that a'=(a1+a2+a3+a4)/4; and the preset indicator threshold is set to a0. In this case, a' is compared with a0, to obtain the second detection result. In addition, in the second detection result, it is assumed that a'>a0. Apparently, in this case, the second detection result indicates that the average value is greater than the preset indicator threshold, and it may be determined that the network environment of the pulling terminal is of the first-level quality. Alternatively, in the second detection result, it is assumed that a'<a0. Apparently, in this case, the second detection result indicates that the average value is less than or equal to the preset indicator threshold, and it may be determined that the network environment of the pulling terminal is of the second-level quality.

In addition to the summation and averaging operations, other operation processing may alternatively be performed on the plurality of values. For example, the summation and averaging operations are performed on the plurality of values, and then an operation of solving a product of the average value and a specified weight is performed. In various embodiments, operation processing based on the plurality of values may be flexibly adjusted.

In this way, by implementing this embodiment and using the plurality of values of the network indicator, accuracy of determining the quality of the network environment of the pulling terminal can be improved, so that accuracy of determining the pulling bit rate can be improved.

The "determining, based on a relationship between the value of the network indicator and a preset indicator threshold, quality of a network environment of the pulling terminal" is for a network indicator that a larger network indicator indicates poorer network quality and a smaller network indicator indicates better network quality. For a network indicator that a larger network indicator indicates better network quality and a smaller network indicator indicates poorer network quality, adaptive adjustment may be performed.

For detailed descriptions of S302 shown in FIG. 4, refer to S302 shown in FIG. 3. For detailed descriptions of S201, S203, and S204 shown in FIG. 4, refer to S201, S203, and S204 shown in FIG. 2. Details are not described herein again.

In this embodiment of this disclosure, a pulling terminal determines quality of a network environment of the pulling terminal based on a relationship between a value of a network indicator and a preset indicator threshold, and may rapidly determine a pulling bit rate matching the quality of the network environment based on the quality of the network environment. The implementation process is simple, and is applicable to many application scenarios.

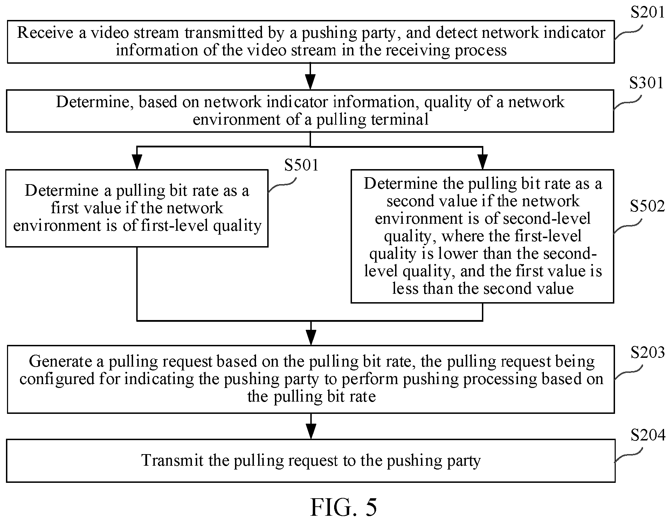

In some embodiments of this disclosure, another method for controlling video stream transmission is provided. The method for controlling video stream transmission may be performed by a pulling terminal 101 used as a pulling party. As shown in FIG. 5, the method for controlling video stream transmission may include S501, S502, S301, S201, S203, and S204.

Detailed descriptions of S501 and S502 are as follows.

S501: Determine a pulling bit rate as a first value if a network environment is of first-level quality.

S502: Determine the pulling bit rate as a second value if the network environment is of second-level quality, where the first-level quality is lower than the second-level quality, and the first value is less than the second value.

As described in the foregoing embodiment, better quality of the network environment indicates a larger determined pulling bit rate, and poorer quality of the network environment indicates a smaller determined pulling bit rate. Therefore, if the network environment is of the first-level quality, the pulling bit rate is determined as the first value; if the network environment is of the second-level quality, the pulling bit rate is determined as the second value, where the first-level quality is lower than the second-level quality, and the first value is less than the second value.

For example, Table 1 shows an example of determining the pulling bit rate matching the quality of the network environment based on the quality of the network environment.

**Table 1**

| Quality of the network environment | Pulling bit rate |
|---|---|
| First level (poor quality) | 1 Mbps |
| Second level (good quality) | 3 Mbps |

For detailed descriptions of S301 shown in FIG. 5, refer to S301 shown in FIG. 3. For detailed descriptions of S201, S203, and S204 shown in FIG. 5, refer to S201, S203, and S204 shown in FIG. 2. Details are not described herein again.

In this embodiment of this disclosure, based on quality of a level to which a network environment belongs, a pulling terminal may rapidly determine a pulling bit rate matching the quality of the network environment. The implementation process is simple, and is applicable to many application scenarios.

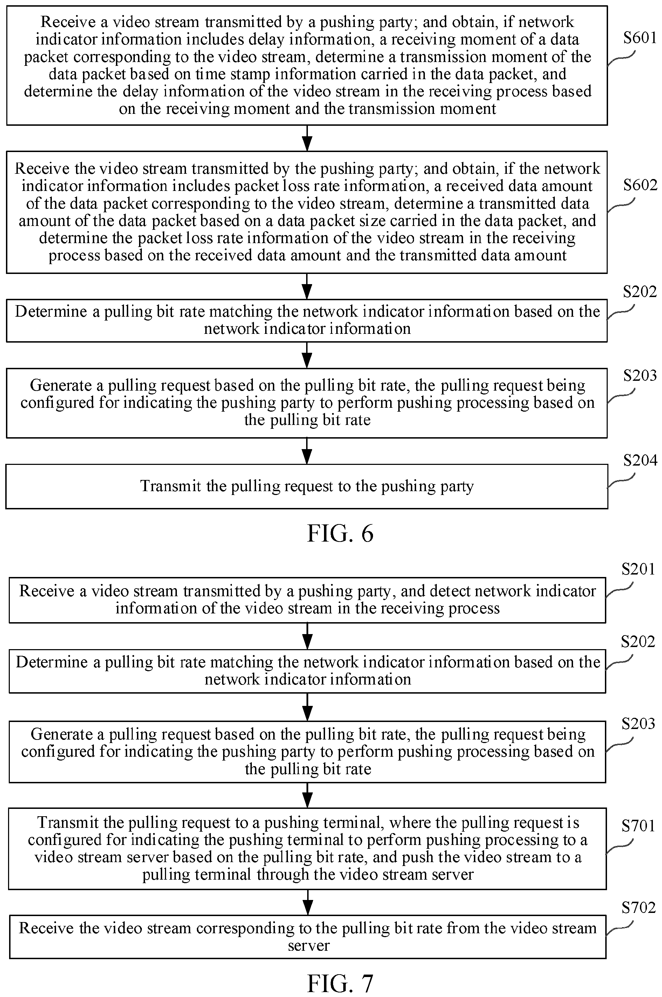

In some embodiments of this disclosure, another method for controlling video stream transmission is provided. The method for controlling video stream transmission may be performed by a pulling terminal 101 used as a pulling party. As shown in FIG. 6, the method for controlling video stream transmission may include S601, S602, and S202 to S204. Network indicator information includes at least one of delay information or packet loss rate information.

Detailed descriptions of S601 are as follows.

S601: Receive a video stream transmitted by a pushing party; and obtain, if the network indicator information includes the delay information, a receiving moment of a data packet corresponding to the video stream, determine a transmission moment of the data packet based on time stamp information carried in the data packet, and determine the delay information of the video stream in the receiving process based on the receiving moment and the transmission moment.

When the pushing party transmits the video stream to the pulling terminal, the video stream may be specifically transmitted in a form of a data packet, where the data packet may carry corresponding time stamp information when the pushing party transmits the data packet, so that the pulling terminal determines a transmission moment of the data packet based on the time stamp information. In addition, when the data packet is received, the pulling terminal may further record a moment at which the data packet is received, that is, a receiving moment of the data packet. Therefore, in this embodiment of this disclosure, through the receiving moment and the transmission moment, delay information of the data packet in the receiving process may be determined, to obtain the delay information of the video stream in the receiving process.

S602: Receive the video stream transmitted by the pushing party; and obtain, if the network indicator information includes the packet loss rate information, a received data amount of the data packet corresponding to the video stream, determine a transmitted data amount of the data packet based on a data packet size carried in the data packet, and determine the packet loss rate information of the video stream in the receiving process based on the received data amount and the transmitted data amount.

When the pushing party transmits the video stream to the pulling terminal, the video stream may be specifically transmitted in a form of a data packet, where the data packet may also carry data packet size information corresponding to the data packet transmitted by the pushing party, so that the pulling terminal determines a transmitted data amount of the data packet based on the data packet size information. In addition, when the data packet is received, the pulling terminal may further record a data packet size of the received data packet, that is, a received data amount of the data packet. Therefore, in this embodiment of this disclosure, through the received data amount and the transmitted data amount, packet loss rate information of the data packet in the receiving process may be determined, to obtain the packet loss rate information of the video stream in the receiving process.

In this embodiment of this disclosure, an example in which the network indicator information includes the delay information and the packet loss rate information is used for description. The network indicator information may alternatively include another network indicator information such as a throughput. Correspondingly, the packet loss rate information of the video stream in the receiving process may be determined based on the another network indicator information. In various embodiments, adaptive adjustment may be performed.

For detailed descriptions of S202 to S204 shown in FIG. 6, refer to S202 to S204 shown in FIG. 2. Details are not described herein again.

In this embodiment of this disclosure, by detecting a delay, a packet loss rate, and the like of a video stream in a receiving process, a pulling terminal may rapidly and accurately obtain network indicator information such as the delay and the packet loss rate, to provide a support for subsequently determining an appropriate pulling bit rate.

In some embodiments of this disclosure, another method for controlling video stream transmission is provided. The method for controlling video stream transmission may be performed by a pulling terminal 101 used as a pulling party. As shown in FIG. 7, the method for controlling video stream transmission may include S701, S702, and S201 to S203. A pushing party includes a pushing terminal.

Detailed descriptions of S701 and S702 are as follows.

S701: Transmit a pulling request to the pushing terminal, where the pulling request is configured for indicating the pushing terminal to perform pushing processing to a video stream server based on a pulling bit rate, and push a video stream to the pulling terminal through the video stream server.

In this embodiment of this disclosure, the pulling terminal may directly transmit the pulling request to the pushing terminal, so that the pushing terminal may perform pushing processing to the video stream server based on the pulling bit rate carried in the pulling request, to transmit the video stream to the pushing terminal through the video stream server.

S702: Receive the video stream corresponding to the pulling bit rate from the video stream server.

In this embodiment of this disclosure, the pulling terminal transmits the pulling request to the pushing terminal. Then, the pushing terminal performs pushing processing to the video stream server based on the pulling bit rate carried in the pulling request, to transmit the video stream to the pushing terminal through the video stream server. Correspondingly, the pulling terminal receives the video stream corresponding to the pulling bit rate from the video stream server.

For detailed descriptions of S201 to S203 shown in FIG. 7, refer to S201 to S203 shown in FIG. 2. Details are not described herein again.

In this embodiment of this disclosure, a pulling terminal transmits a pulling request to a pushing terminal, so that the pushing terminal can make a corresponding decision (for example, improve/reduce a camera bit rate), to implement adaptive bit rate adjustment.

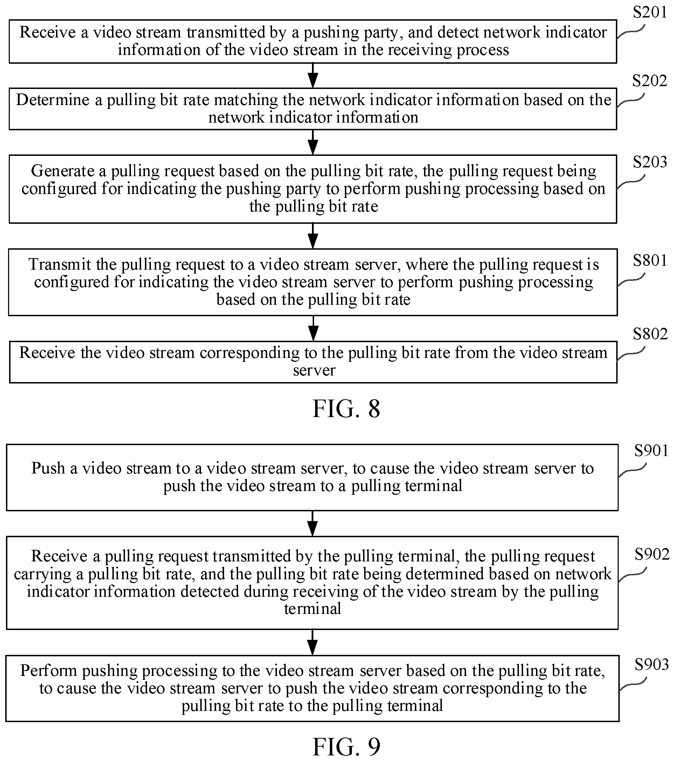

In some embodiments of this disclosure, another method for controlling video stream transmission is provided. The method for controlling video stream transmission may be performed by a pulling terminal 101 used as a pulling party. As shown in FIG. 8, the method for controlling video stream transmission may include S801, S802, and S201 to S203. A pushing party includes a pushing terminal.

Detailed descriptions of S801 and S802 are as follows.

S801: Transmit a pulling request to a video stream server, where the pulling request is configured for indicating the video stream server to perform pushing processing based on a pulling bit rate.

In this embodiment of this disclosure, the pulling terminal may directly transmit the pulling request to the video stream server, so that the video stream server may perform pushing processing to the pulling terminal based on the pulling bit rate carried in the pulling request.

S802: Receive a video stream corresponding to the pulling bit rate from the video stream server.

In this embodiment of this disclosure, the pulling terminal transmits the pulling request to the video stream server. Then, the video stream server performs pushing processing to the pulling terminal based on the pulling bit rate carried in the pulling request. Correspondingly, the pulling terminal receives the video stream corresponding to the pulling bit rate from the video stream server.

For detailed descriptions of S201 to S203 shown in FIG. 8, refer to S201 to S203 shown in FIG. 2. Details are not described herein again.

In this embodiment of this disclosure, a pulling terminal transmits a pulling request to a video stream server, so that the video stream server can make a corresponding decision (for example, select a video stream corresponding to a pushing bit rate matching the pulling bit rate from video streams respectively corresponding to a plurality of pushing bit rates), to implement adaptive bit rate adjustment.

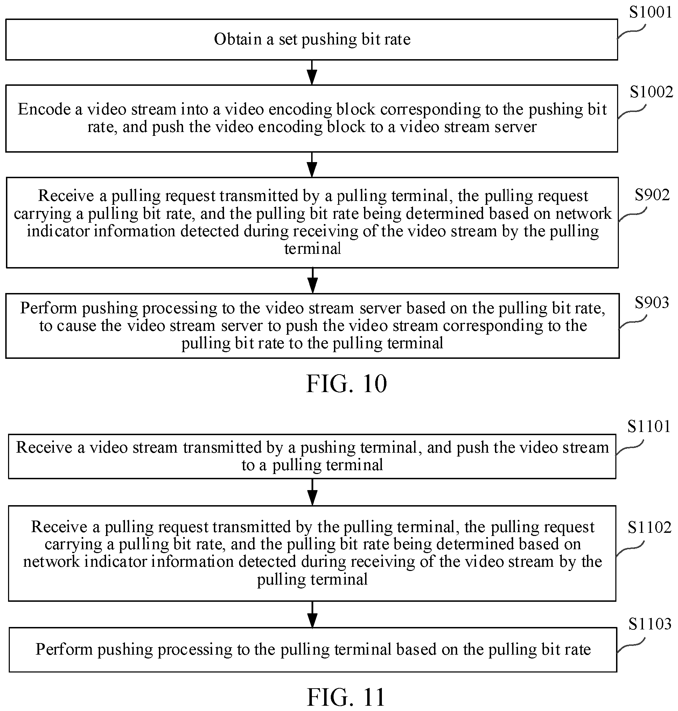

Some embodiments shown in FIG. 2 to FIG. 8 are described from a perspective of a pulling terminal, and the implementation details of the technical solutions in some embodiments of this disclosure are described below in detail with reference to FIG. 9 and FIG. 10 from a perspective of a pushing terminal.

FIG. 9 is a flowchart of a method for controlling video stream transmission according to some embodiments of this disclosure. The method for controlling video stream transmission may be performed by a pushing terminal 102 used as a pushing party. As shown in FIG. 9, the method for controlling video stream transmission includes at least S901 to S903. Detailed descriptions are as follows.

S901: Push a video stream to a video stream server, to cause the video stream server to push the video stream to a pulling terminal.

In this embodiment of this disclosure, the pushing terminal transmits the video stream to the video stream server, and then the video stream server transmits the received video stream to the pulling terminal, so that the pulling terminal may detect network indicator information of the video stream in the receiving process; and determine a pulling bit rate matching the network indicator information based on the detected network indicator information, to generate a pulling request based on the pulling bit rate.

S902: Receive the pulling request transmitted by the pulling terminal, the pulling request carrying the pulling bit rate, and the pulling bit rate being determined based on network indicator information detected during receiving of the video stream by the pulling terminal.

As described in the foregoing embodiment, the pulling terminal may transmit the pulling request to the pushing terminal. Correspondingly, the pushing terminal receives the pulling request transmitted by the pulling terminal.

S903: Perform pushing processing to the video stream server based on the pulling bit rate, to cause the video stream server to push the video stream corresponding to the pulling bit rate to the pulling terminal.

In this embodiment of this disclosure, after receiving the pulling request transmitted by the pulling terminal, the pushing terminal may perform pushing processing to the video stream server based on the pulling bit rate carried in the pulling request. Then, the video stream server transmits the video stream corresponding to the received pulling bit rate to the pulling terminal.

In this embodiment of this disclosure, by receiving a pulling request carrying a pulling bit rate transmitted by a pulling terminal, a pushing terminal may perform pushing processing to the pulling terminal based on the pulling bit rate, in other words, video stream pushing performed by the pushing terminal to the pulling terminal is adapted to a network change, so that proper control of performing pushing to the pulling terminal is achieved.

In some embodiments of this disclosure, another method for controlling video stream transmission is provided. The method for controlling video stream transmission may be performed by a pushing terminal 102 used as a pushing party. As shown in FIG. 10, the method for controlling video stream transmission may include S1001, S1002, S902, and S903.

Detailed descriptions of S1001 and S1002 are as follows.

S1001: Obtain a set pushing bit rate.

In this embodiment of this disclosure, when transmitting a video stream to a pulling terminal in an early stage, the pushing terminal may perform pushing processing based on the set pushing bit rate, where the pushing bit rate may be set by a relevant operator, and there may be one or more pushing bit rates.

S1002: Encode the video stream into a video encoding block corresponding to the pushing bit rate, and push the video encoding block to a video stream server.

In this embodiment of this disclosure, after obtaining the set pushing bit rate, the pushing terminal may encode the video stream into the video encoding block corresponding to the pushing bit rate, and transmit the video encoding block to the video stream server.

In some embodiments of this disclosure, there are a plurality of set pushing bit rates; and the encoding the video stream into a video encoding block corresponding to the pushing bit rate, and pushing the video encoding block to a video stream server may at least include:
encoding video streams into video encoding blocks respectively corresponding to the plurality of pushing bit rates, and pushing the video encoding blocks respectively corresponding to the plurality of pushing bit rates to the video stream server.

For example, the plurality of set pushing bit rates are b1, b2, and b3. In this case, a video stream is encoded into a video encoding block B1 corresponding to the pushing bit rate b1, a video stream is encoded into a video encoding block B2 corresponding to the pushing bit rate b2, a video stream is encoded into a video encoding block B3 corresponding to the pushing bit rate b3, and the video encoding blocks B1, B2, and B3 are transmitted to the video stream server.

As described in the foregoing embodiment, there are usually a plurality of video stream servers. Therefore, in this embodiment, the video encoding blocks corresponding to the plurality of pushing bit rates are pushed to the video stream servers respectively. For example, based on the foregoing example, there are three video stream servers: K1, K2, and K3. In this case, the video encoding blocks B1, B2, and B3 are transmitted to the video stream server K1, the video encoding blocks B1, B2, and B3 are transmitted to the video stream server K2, and the video encoding blocks B1, B2, and B3 are transmitted to the video stream server K3.

In this way, by implementing this embodiment, the video encoding blocks corresponding to the plurality of pushing bit rates are pushed to the video stream servers respectively, so that the video stream servers can make corresponding decisions subsequently.

In some embodiments of this disclosure, there is one set pushing bit rate; and the encoding the video stream into a video encoding block corresponding to the pushing bit rate, and pushing the video encoding block to a video stream server may at least include:
encoding the video stream into a video encoding block corresponding to the one pushing bit rate, and pushing the video encoding block corresponding to the one pushing bit rate to the video stream server.

For example, the one set pushing bit rate is b1. In this case, the video stream is encoded into a video encoding block B1 corresponding to the pushing bit rate b1, and the video encoding block B1 is transmitted to the video stream server.

As described in the foregoing embodiment, there are usually a plurality of video stream servers. Therefore, in this embodiment of this disclosure, the video encoding block corresponding to the one pushing bit rate is pushed to the video stream servers respectively. For example, based on the foregoing example, there are three video stream servers: K1, K2, and K3. In this case, the video encoding block B1 is transmitted to the video stream server K1, the video encoding block B1 is transmitted to the video stream server K2, and the video encoding block B1 is transmitted to the video stream server K3.

In this way, by implementing this embodiment, the video encoding block corresponding to the one pushing bit rate is pushed to the video stream servers, so that the video stream servers can make corresponding decisions subsequently.

In some embodiments of this disclosure, the encoding the video stream into a video encoding block corresponding to the pushing bit rate, and pushing the video encoding block to a video stream server may at least include:
encoding the video stream based on the pushing bit rate, to obtain a plurality of video encoding blocks with specified duration; and
pushing the plurality of video encoding blocks to the video stream server through a plurality of links.

In other words, in this embodiment, the pushing terminal may encode the video stream based on the pushing bit rate, to obtain the plurality of video encoding blocks with the specified duration; and push the plurality of video encoding blocks to the video stream server through the plurality of links, where the specified duration may be set by a relevant operator.

For example, for a pushing bit rate b1, the specified duration is set to 5 seconds. In this case, the video stream is encoded based on the pushing bit rate b1, to obtain a plurality of video encoding blocks with 5 seconds. In addition, the plurality of links are set between the pushing terminal and the video stream server for communication. In this case, the plurality of obtained video encoding blocks with 5 seconds may be transmitted to the video stream server through the plurality of links.

In this embodiment, the pushing terminal may push, based on a real-time streaming protocol (RTSP), the plurality of video encoding blocks to the video stream server through the plurality of links.

In this way, by implementing this embodiment, blocking can reduce an amount of buffering required for a link at each time point, reduce a transmission delay of the video stream, and avoid a phenomenon such as the video stream server being unable to adapt to downloading because the video stream has a too large resource and is directly transmitted to the video stream server; and concurrent transmission through the plurality of links can improve a transmission rate of the video stream.

For detailed descriptions of S902 and S903 shown in FIG. 10, refer to S902 and S903 shown in FIG. 9. Details are not described herein again.

In this embodiment of this disclosure, a pushing terminal obtains a set pushing bit rate, encodes a video stream into a video encoding block corresponding to the pushing bit rate, and pushes the video encoding block to a video stream server, to provide a support for a pulling terminal to detect network indicator information of the video stream in a receiving process.

Some embodiments shown in FIG. 9 and FIG. 10 are described from a perspective of a pushing terminal, and the implementation details of the technical solutions in some embodiments of this disclosure are described below in detail with reference to FIG. 11 to FIG. 14 from a perspective of a video stream server.

FIG. 11 is a flowchart of a method for controlling video stream transmission according to some embodiments of this disclosure. The method for controlling video stream transmission may be performed by a video stream server 103 used as a pushing party. As shown in FIG. 11, the method for controlling video stream transmission includes at least S1101 to S1103. Detailed descriptions are as follows.

S1101: Receive a video stream transmitted by a pushing terminal, and push the video stream to a pulling terminal.

In this embodiment of this disclosure, the video stream server may receive the video stream transmitted by the pushing terminal, and transmit the received video stream to the pulling terminal, so that the pulling terminal may detect network indicator information of the video stream in the receiving process; and determine a pulling bit rate matching the network indicator information based on the detected network indicator information, to generate a pulling request based on the pulling bit rate.

S1102: Receive the pulling request transmitted by the pulling terminal, the pulling request carrying the pulling bit rate, and the pulling bit rate being determined based on network indicator information detected during receiving of the video stream by the pulling terminal.

As described in the foregoing embodiment, the pulling terminal may transmit the pulling request to the video stream server. Correspondingly, the video stream server receives the pulling request transmitted by the pulling terminal.

S1103: Perform pushing processing to the pulling terminal based on the pulling bit rate.

In this embodiment of this disclosure, after receiving the pulling request transmitted by the pulling terminal, the video stream server may perform pushing processing to the pulling terminal based on the pulling bit rate carried in the pulling request.

In this embodiment of this disclosure, by receiving a pulling request carrying a pulling bit rate transmitted by a pulling terminal, a video stream server may perform pushing processing to the pulling terminal based on the pulling bit rate, in other words, video stream pushing performed by the video stream server to the pulling terminal is adapted to a network change, so that proper control of performing pushing to the pulling terminal is achieved.

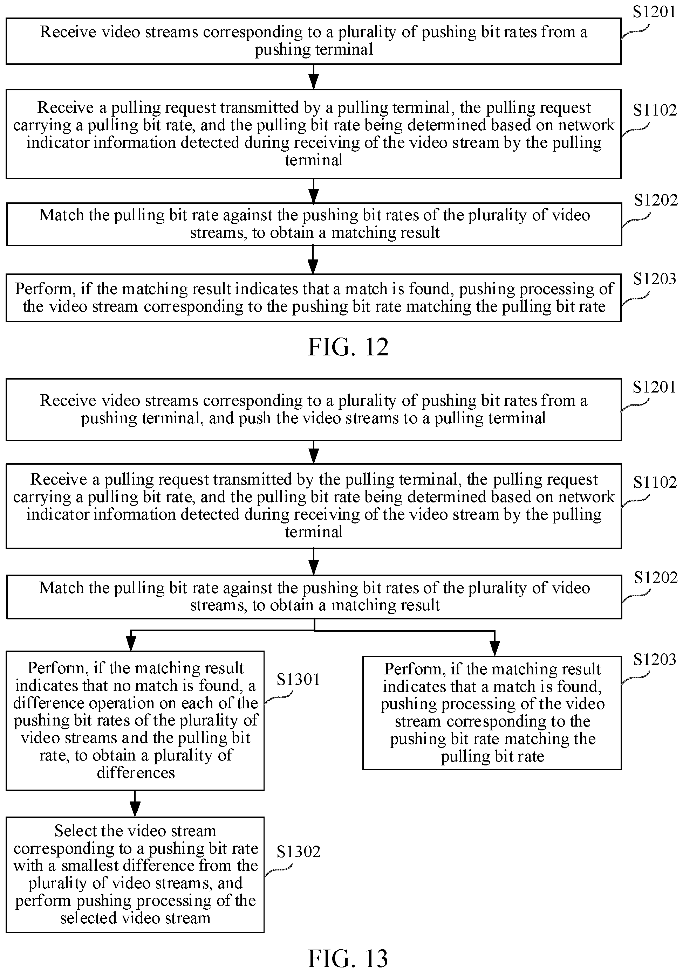

In some embodiments of this disclosure, another method for controlling video stream transmission is provided. The method for controlling video stream transmission may be performed by a video stream server 103 used as a pushing party. As shown in FIG. 12, the method for controlling video stream transmission may include S1201 to S1203, and S1102.

Detailed descriptions of S1201 to S1203 are as follows.

S1201: Receive video streams corresponding to a plurality of pushing bit rates from a pushing terminal.

As described in the foregoing embodiment, the pushing terminal may encode the video streams into video encoding blocks respectively corresponding to the plurality of pushing bit rates, and push the video encoding blocks respectively corresponding to the plurality of pushing bit rates to the video stream server. Correspondingly, the video stream server receives the video encoding blocks respectively corresponding to the plurality of pushing bit rates from the pushing terminal, that is, the video streams respectively corresponding to the plurality of pushing bit rates.

S1202: Match a pulling bit rate against the pushing bit rates of the plurality of video streams, to obtain a matching result.

In this embodiment of this disclosure, after receiving a pulling request transmitted by a pulling terminal, the video stream server may match the pulling bit rate carried in the pulling request against the pushing bit rates of the plurality of video streams, to obtain the matching result.

S1203: Perform, if the matching result indicates that a match is found, pushing processing of the video stream corresponding to the pushing bit rate matching the pulling bit rate.

If the matching result indicates that a match is found, pushing processing of the video stream corresponding to the pushing bit rate matching the pulling bit rate may be performed.

For example, based on the foregoing example, the video stream server receives video encoding blocks B1, B2, and B3 transmitted by the pushing terminal, where a pushing bit rate corresponding to the video encoding block B1 is b1, a pushing bit rate corresponding to the video encoding block B2 is b2, and a pushing bit rate corresponding to the video encoding block B3 is b3; and the pulling bit rate carried in the pulling request is b'. In this case, the pulling bit rate b' is matched against each of the pushing bit rates b1, b2, and b3, to obtain the matching result. In addition, in the matching result, it is assumed that b'=b1. In this case, it indicates that a match is found, and pushing processing of the video stream corresponding to the pushing bit rate b1 matching the pulling bit rate may be performed, in other words, the video stream corresponding to the pushing bit rate b1 is transmitted to the pulling terminal.

For detailed descriptions of S1102 shown in FIG. 12, refer to S1102 shown in FIG. 11. Details are not described herein again.

In this embodiment of this disclosure, a video stream server makes a decision by matching a pulling bit rate against pushing bit rates of a plurality of video streams, so that adaptive bit rate adjustment is implemented.

In some embodiments of this disclosure, another method for controlling video stream transmission is provided. The method for controlling video stream transmission may be performed by a video stream server 103 used as a pushing party. As shown in FIG. 13, after S1202, the method for controlling video stream transmission may include S1301 and S1302.

Detailed descriptions of S1301 and S1302 are as follows.

S1301: Perform, if a matching result indicates that no match is found, a difference operation on each of pushing bit rates of a plurality of video streams and a pulling bit rate, to obtain a plurality of differences.

As described in the foregoing embodiment, after receiving a pulling request transmitted by a pulling terminal, the video stream server may match the pulling bit rate carried in the pulling request against the pushing bit rates of the plurality of video streams, to obtain the matching result.

If the matching result indicates that no match is found, the difference operation may be performed on each of the pushing bit rates of the plurality of video streams and the pulling bit rate, to obtain the plurality of differences.

S1302: Select the video stream corresponding to a pushing bit rate with a smallest difference from the plurality of video streams, and perform pushing processing of the selected video stream.

In this embodiment of this disclosure, after performing the difference operation on each of the pushing bit rates of the plurality of video streams and the pulling bit rate to obtain the plurality of differences, the video stream server may select the video stream corresponding to the pushing bit rate with the smallest difference from the plurality of video streams, and perform pushing processing of the selected video stream.

For example, based on the foregoing example, in the matching result, it is assumed that b' is not equal to each of b1, b2, and b3. In this case, it indicates that no match is found, and the difference operation is performed on b' and each of b1, b2, and b3, to obtain that b1'=|b'-b1|, b2'=|b'-b2|, and b3'=|b'-b3|. In addition, it is assumed that b1' in the three differences b1', b2', and b3' is smallest. In this case, pushing processing of the video stream corresponding to the pushing bit rate b1 corresponding to b1' is performed, in other words, the video stream corresponding to the pushing bit rate b1 is transmitted to the pulling terminal.

For detailed descriptions of S1201 to S1203 shown in FIG. 13, refer to S1201 to S1203 shown in FIG. 12. Details are not described herein again.

In this embodiment of this disclosure, a video stream server makes a decision by matching a pulling bit rate against pushing bit rates of a plurality of video streams, so that adaptive bit rate adjustment is implemented.

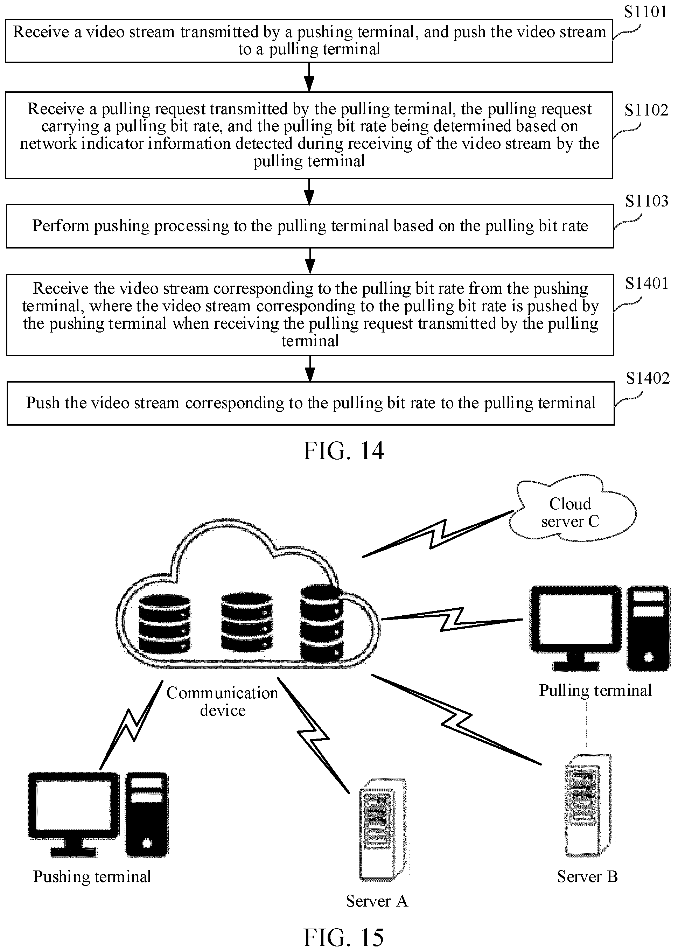

In some embodiments of this disclosure, another method for controlling video stream transmission is provided. The method for controlling video stream transmission may be performed by a video stream server 103 used as a pushing party. As shown in FIG. 14, after S1103, the method for controlling video stream transmission may include S1401 and S1402.

Detailed descriptions of S1401 and S1402 are as follows.

S1401: Receive a video stream corresponding to a pulling bit rate from a pushing terminal, where the video stream corresponding to the pulling bit rate is pushed by the pushing terminal when receiving a pulling request transmitted by a pulling terminal.

As described in the foregoing embodiment, after receiving the pulling request transmitted by the pulling terminal, the pushing terminal may perform pushing processing to the video stream server based on the pulling bit rate carried in the pulling request. Correspondingly, the video stream server receives the video stream corresponding to the pulling bit rate from the pushing terminal.

S1402: Push the video stream corresponding to the pulling bit rate to the pulling terminal.

In this embodiment of this disclosure, after receiving the video stream corresponding to the pulling bit rate from the pushing terminal, the video stream server may transmit the received video stream corresponding to the pulling bit rate to the pulling terminal.

For detailed descriptions of S1101 to S1103 shown in FIG. 14, refer to S1101 to S1103 shown in FIG. 11. Details are not described herein again.

In this embodiment of this disclosure, after receiving a video stream corresponding to a pulling bit rate from a pushing terminal, a video stream server may transmit the received video stream corresponding to the pulling bit rate to a pulling terminal, so that the pulling terminal can successfully obtain the video stream corresponding to the pulling bit rate.

A specific scenario in some embodiments of this disclosure is described below in detail.

Refer to FIG. 15. A pulling terminal, a pushing terminal, video stream servers (where there are three servers: a server A, a server B, and a server C, the server C is a cloud server, and the server B corresponds to the pulling terminal), and a communication device are mainly included.

The pulling terminal is mainly configured to receive a video stream transmitted by a pushing party (namely, the pushing terminal and the video stream server), and detect network indicator information of the video stream in the receiving process; determine a pulling bit rate matching the network indicator information based on the network indicator information; generate a pulling request based on the pulling bit rate, the pulling request being configured for indicating the pushing party to perform pushing processing based on the pulling bit rate; and transmit the pulling request to the pushing party.

The pushing terminal is mainly configured to push a video stream to the video stream server, to cause the video stream server to push the video stream to the pulling terminal; receive a pulling request transmitted by the pulling terminal, the pulling request carrying a pulling bit rate, and the pulling bit rate being determined based on network indicator information detected during receiving of the video stream by the pulling terminal; and perform pushing processing to the video stream server based on the pulling bit rate, to cause the video stream server to push the video stream corresponding to the pulling bit rate to the pulling terminal.

The video stream server is mainly configured to receive a video stream transmitted by the pushing terminal, and push the video stream to the pulling terminal; receive a pulling request transmitted by the pulling terminal, the pulling request carrying a pulling bit rate, and the pulling bit rate being determined based on network indicator information detected during receiving of the video stream by the pulling terminal; and perform pushing processing to the pulling terminal based on the pulling bit rate.

The communication device is mainly configured to provide a support for mutual communication among the pulling terminal, the pushing terminal, and the video stream server, and may include a 4G/5G base station, a road side unit (RSU), WiFi, 5G customer premise(s) equipment (CPE), or the like.

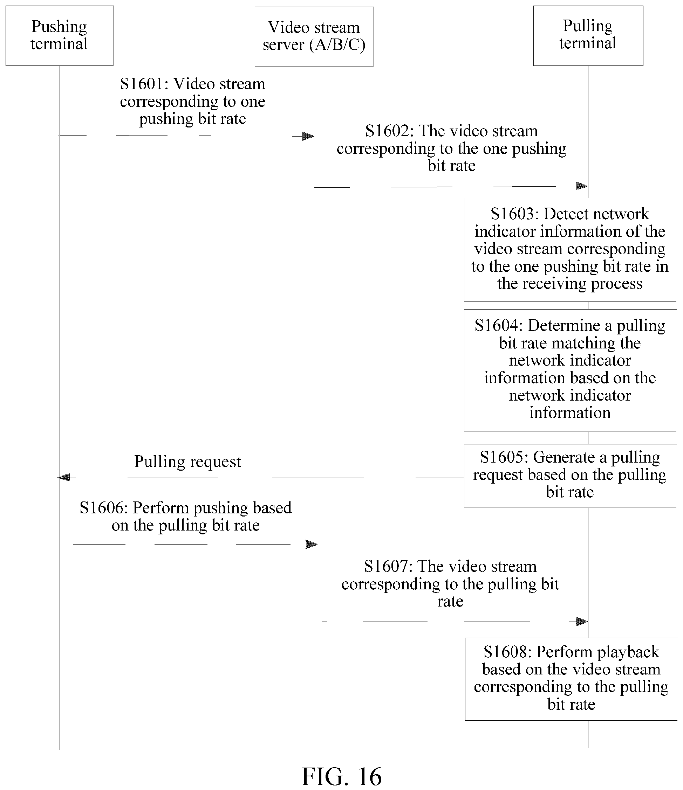

Based on an implementation environment shown in FIG. 15, FIG. 16 is a flowchart of a method for controlling video stream transmission according to some embodiments of this disclosure. As shown in FIG. 16, the method for controlling video stream transmission includes at least S1601 to S1608. Detailed descriptions are as follows.

S1601: A pushing terminal pushes a video stream corresponding to one pushing bit rate to a video stream server.

In this embodiment of this disclosure, a pushing service may be pre-configured in the pushing terminal, where the pushing service is program code written by a developer to implement a pushing function. Correspondingly, when the pushing terminal has a pushing need, the pushing service is started, and pushing may be implemented based on a detected pushing command.

In this embodiment of this disclosure, the video stream server may be an RTSP server, and the one pushing bit rate may be b1. In other words, a video stream corresponding to the pushing bit rate b1 is transmitted to the video stream servers A, B, and C.

In this embodiment of this disclosure, the video stream may be in any video form, such as ".mp4", ".flv", or ".avi". The video stream includes a plurality of frames of images, and the plurality of frames of images may also be in any image format, such as ".gif" or ".eps".

In one embodiment, the pushing terminal may encode the video stream based on the one pushing bit rate, to obtain a plurality of video encoding blocks with specified duration; and push the plurality of video encoding blocks to the video stream server through a plurality of links.

S1602: The video stream server receives the video stream corresponding to the one pushing bit rate from the pushing terminal, and pushes the video stream corresponding to the one pushing bit rate to a pulling terminal.

In this embodiment of this disclosure, the video stream servers A, B, and C transmit the video stream corresponding to the pushing bit rate b1 to the pulling terminal.

S1603: The pulling terminal receives the video stream corresponding to the one pushing bit rate from the video stream server, and detects network indicator information of the video stream corresponding to the one pushing bit rate in the receiving process.

In this embodiment of this disclosure, a pulling service may be pre-configured in the pulling terminal, where the pulling service is program code written by the developer to implement a pulling function. Correspondingly, when the pulling terminal has a pulling need, the pulling service is started, and pulling may be implemented based on a detected pulling command.

In one embodiment, the network indicator information includes at least one delay information and packet loss rate information. If the network indicator information includes the delay information, a receiving moment of a data packet corresponding to the video stream is obtained, a transmission moment of the data packet is determined based on time stamp information carried in the data packet, and the delay information of the video stream in the receiving process is determined based on the receiving moment and the transmission moment. If the network indicator information includes the packet loss rate information, a received data amount of the data packet corresponding to the video stream is obtained, a transmitted data amount of the data packet is determined based on a data packet size carried in the data packet, and the packet loss rate information of the video stream in the receiving process is determined based on the received data amount and the transmitted data amount.

S1604: The pulling terminal determines a pulling bit rate matching the network indicator information based on the network indicator information.

In one embodiment, the pulling terminal determines, based on a relationship between a value of a network indicator and a preset indicator threshold, quality of a network environment of the pulling terminal. The pulling bit rate is determined as a first value if the network environment is of first-level quality; and the pulling bit rate is determined as a second value if the network environment is of second-level quality, where the first-level quality is lower than the second-level quality, and the first value is less than the second value.

In one embodiment, the pulling terminal may alternatively receive network information related to a base station side transmitted by a communication device, to determine the pulling bit rate matching the network indicator information based on the relevant network information.

S1605: The pulling terminal generates a pulling request based on the pulling bit rate, and transmits the pulling request to the pushing terminal.

The pushing terminal transmits a video stream of a single pushing bit rate version (namely, the pushing bit rate b1) to the three video stream servers A, B, and C respectively. Therefore, the pushing terminal does not still determine a video stream of a bit rate version required by the pulling terminal, and the pulling terminal needs to notify the pushing terminal of the pulling bit rate for making a decision (for example, improving/reducing a camera bit rate), to implement adaptive bit rate adjustment.

S1606: The pushing terminal receives the pulling request transmitted by the pulling terminal, and performs pushing processing to the video stream server based on the pulling bit rate.

S1607: The video stream server receives the video stream corresponding to the pulling bit rate from the pushing terminal, and pushes the video stream corresponding to the pulling bit rate to the pulling terminal.

S1608: The pulling terminal receives the video stream corresponding to the pulling bit rate from the video stream server, and performs playback based on the video stream corresponding to the pulling bit rate.

For detailed descriptions of S1601 to S1608 shown in FIG. 16, refer to the foregoing embodiments. Details are not described herein again.

The method for controlling video stream transmission provided in this embodiment of this disclosure is applicable to an application scenario with a low bandwidth need.

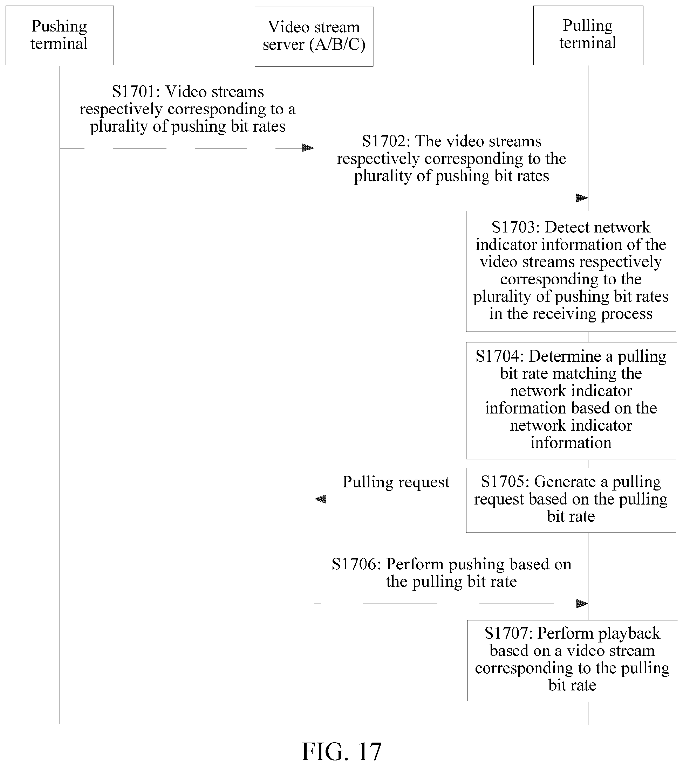

Based on an implementation environment shown in FIG. 15, FIG. 17 is a flowchart of a method for controlling video stream transmission according to some embodiments of this disclosure. As shown in FIG. 17, the method for controlling video stream transmission includes at least S1701 to S1707. Detailed descriptions are as follows.

S1701: A pushing terminal pushes video streams respectively corresponding to a plurality of pushing bit rates to a video stream server.

In this embodiment of this disclosure, a pushing service may be pre-configured in the pushing terminal, where the pushing service is program code written by a developer to implement a pushing function. Correspondingly, when the pushing terminal has a pushing need, the pushing service is started, and pushing may be implemented based on a detected pushing command.

In this embodiment of this disclosure, the video stream server may be an RTSP server, and the plurality of pushing bit rates may be b1, b2, and b3. In other words, video streams respectively corresponding to the pushing bit rates b1, b2, and b3 are transmitted to video stream servers A, B, and C.

In this embodiment of this disclosure, the video stream may be in any video form, such as ".mp4", ".flv", or ".avi". The video stream includes a plurality of frames of images, and the plurality of frames of images may also be in any image format, such as ".gif" or ".eps".

In one embodiment, the pushing terminal may encode the video streams based on the plurality of pushing bit rates respectively, to obtain a plurality of video encoding blocks with specified duration; and push the plurality of video encoding blocks to the video stream server through a plurality of links.

S1702: The video stream server receives the video streams respectively corresponding to the plurality of pushing bit rates from the pushing terminal, and pushes the video streams respectively corresponding to the plurality of pushing bit rates to a pulling terminal.

In this embodiment of this disclosure, the video stream servers A, B, and C transmit the video streams respectively corresponding to the pushing bit rate b1, b2, and b3 to the pulling terminal.

S1703: The pulling terminal receives the video streams respectively corresponding to the plurality of pushing bit rates from the video stream server, and detects network indicator information of the video streams respectively corresponding to the plurality of pushing bit rates in the receiving process.

In this embodiment of this disclosure, a pulling service may be pre-configured in the pulling terminal, where the pulling service is program code written by the developer to implement a pulling function. Correspondingly, when the pulling terminal has a pulling need, the pulling service is started, and pulling may be implemented based on a detected pulling command.

In one embodiment, the network indicator information includes at least one delay information and packet loss rate information. If the network indicator information includes the delay information, a receiving moment of a data packet corresponding to the video stream is obtained, a transmission moment of the data packet is determined based on time stamp information carried in the data packet, and the delay information of the video stream in the receiving process is determined based on the receiving moment and the transmission moment. If the network indicator information includes the packet loss rate information, a received data amount of the data packet corresponding to the video stream is obtained, a transmitted data amount of the data packet is determined based on a data packet size carried in the data packet, and the packet loss rate information of the video stream in the receiving process is determined based on the received data amount and the transmitted data amount.

S1704: The pulling terminal determines a pulling bit rate matching the network indicator information based on the network indicator information.

In one embodiment, the pulling terminal determines, based on a relationship between a value of a network indicator and a preset indicator threshold, quality of a network environment of the pulling terminal. The pulling bit rate is determined as a first value if the network environment is of first-level quality; and the pulling bit rate is determined as a second value if the network environment is of second-level quality, where the first-level quality is lower than the second-level quality, and the first value is less than the second value.

In one embodiment, the pulling terminal may alternatively receive network information related to a base station side transmitted by a communication device, to determine the pulling bit rate matching the network indicator information based on the relevant network information.

S1705: The pulling terminal generates a pulling request based on the pulling bit rate, and transmits the pulling request to the video stream server.

The pushing terminal transmits video streams of a plurality of pushing bit rate versions (namely, the pushing bit rates b1, b2, and b3) to the three video stream servers A, B, and C respectively. Therefore, the pushing terminal does not need to make a decision, but the pulling terminal needs to notify the video stream server of the pulling bit rate for making a decision (for example, selecting a video stream corresponding to a pushing bit rate matching the pulling bit rate from the video streams respectively corresponding to the three pushing bit rates b1, b2, and b3), to implement adaptive bit rate adjustment.

S1706: The video stream server receives the pulling request transmitted by the pulling terminal, and performs pushing processing to the pulling terminal based on the pulling bit rate.

S1707: The pulling terminal receives the video stream corresponding to the pulling bit rate from the video stream server, and performs playback based on the video stream corresponding to the pulling bit rate.

For detailed descriptions of S1701 to S1707 shown in FIG. 17, refer to the foregoing embodiments. Details are not described herein again.

The method for controlling video stream transmission provided in this embodiment of this disclosure is applicable to an application scenario with a high delay need.

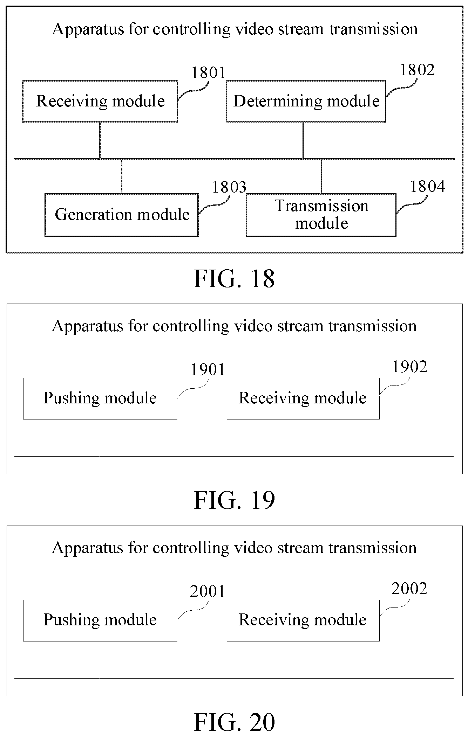

FIG. 18 is a block diagram of an apparatus for controlling video stream transmission according to some embodiments of this disclosure. As shown in FIG. 18, the apparatus for controlling video stream transmission is used in a pulling terminal. The apparatus includes:
a receiving module 1801, configured to receive a video stream transmitted by a pushing party, and detect network indicator information of the video stream in the receiving process;
a determining module 1802, configured to determine a pulling bit rate matching the network indicator information based on the network indicator information;
a generation module 1803, configured to generate a pulling request based on the pulling bit rate, the pulling request being configured for indicating the pushing party to perform pushing processing based on the pulling bit rate; and
a transmission module 1804, configured to transmit the pulling request to the pushing party.

In some embodiments of this disclosure, the determining module 1802 is further configured to:
determine, based on the network indicator information, quality of a network environment of the pulling terminal; and
determining the pulling bit rate matching the quality of the network environment based on the quality of the network environment, where the quality of the network environment is positively correlated with the pulling bit rate.

In some embodiments of this disclosure, the determining module 1802 is further configured to:
determine, based on a relationship between the value of the network indicator and a preset indicator threshold, the quality of the network environment of the pulling terminal.

In some embodiments of this disclosure, the network indicator information includes a plurality of values of the network indicator; and the determining module 1802 is further configured to:
detect a relationship between each of the plurality of values of the network indicator and the preset indicator threshold, to obtain a first detection result; and
determine, if the first detection result indicates that the plurality of values include a specified quantity of values greater than the preset indicator threshold, that the network environment of the pulling terminal is of first-level quality; or
determine, if the first detection result indicates that the plurality of values do not include the specified quantity of values greater than the preset indicator threshold, that the network environment of the pulling terminal is of second-level quality, where the first-level quality is lower than the second-level quality.

In some embodiments of this disclosure, the network indicator information includes a plurality of values of the network indicator; and the determining module 1802 is further configured to:
perform summation and averaging operations on the plurality of values, to obtain an average value;
detect a relationship between the average value and the preset indicator threshold, to obtain a second detection result; and
determine, if the second detection result indicates that the average value is greater than the preset indicator threshold, that the network environment of the pulling terminal is of first-level quality; or
determine, if the second detection result indicates that the average value is less than or equal to the preset indicator threshold, that the network environment of the pulling terminal is of second-level quality, where the first-level quality is lower than the second-level quality.

In some embodiments of this disclosure, the determining module 1802 is further configured to:
determine the pulling bit rate as a first value if the network environment is of first-level quality; or
determine the pulling bit rate as a second value if the network environment is of second-level quality, where the first-level quality is lower than the second-level quality, and the first value is less than the second value.

In some embodiments of this disclosure, the network indicator information includes at least one of delay information or packet loss rate information; and the receiving module 1801 is further configured to:
obtain, if the network indicator information includes the delay information, a receiving moment of a data packet corresponding to the video stream, determine a transmission moment of the data packet based on time stamp information carried in the data packet, and determine the delay information of the video stream in the receiving process based on the receiving moment and the transmission moment; and
obtain, if the network indicator information includes the packet loss rate information, a received data amount of the data packet corresponding to the video stream, determine a transmitted data amount of the data packet based on a data packet size carried in the data packet, and determine the packet loss rate information of the video stream in the receiving process based on the received data amount and the transmitted data amount.

In some embodiments of this disclosure, if the pushing party includes a pushing terminal, the transmission module 1804 is further configured to:
transmit the pulling request to the pushing terminal, where the pulling request is configured for indicating the pushing terminal to perform pushing processing to a video stream server based on the pulling bit rate, and push the video stream to the pulling terminal through the video stream server; and
receive the video stream corresponding to the pulling bit rate from the video stream server.

In some embodiments of this disclosure, if the pushing party includes a video stream server, the transmission module 1804 is further configured to:
transmit the pulling request to the video stream server, where the pulling request is configured for indicating the video stream server to perform pushing processing based on the pulling bit rate; and
receive the video stream corresponding to the pulling bit rate from the video stream server.

FIG. 19 is a block diagram of an apparatus for controlling video stream transmission according to some embodiments of this disclosure. As shown in FIG. 19, the apparatus for controlling video stream transmission is used in a pushing terminal. The apparatus includes:
a pushing module 1901, configured to push a video stream to a video stream server, to cause the video stream server to push the video stream to a pulling terminal; and
a receiving module 1902, configured to receive a pulling request transmitted by the pulling terminal, the pulling request carrying a pulling bit rate, and the pulling bit rate being determined based on network indicator information detected during receiving of the video stream by the pulling terminal; and
the pushing module 1901 being further configured to perform pushing processing to the video stream server based on the pulling bit rate, to cause the video stream server to push the video stream corresponding to the pulling bit rate to the pulling terminal.

In some embodiments of this disclosure, the pushing module 1901 is further configured to:
obtain a set pushing bit rate; and
encode the video stream into a video encoding block corresponding to the pushing bit rate, and push the video encoding block to the video stream server.

In some embodiments of this disclosure, the pushing module 1901 is further configured to:
encode, if there are a plurality of set pushing bit rates, the video stream into video encoding blocks respectively corresponding to the plurality of pushing bit rates, and push the video encoding blocks respectively corresponding to the plurality of pushing bit rates to the video stream server; or
encode, if there is one set pushing bit rate, the video stream into a video encoding block corresponding to the one pushing bit rate, and push the video encoding block corresponding to the one pushing bit rate to the video stream server.

In some embodiments of this disclosure, the pushing module 1901 is further configured to:
encode the video stream based on the pushing bit rate, to obtain a plurality of video encoding blocks with specified duration; and
push the plurality of video encoding blocks to the video stream server through a plurality of links.

FIG. 20 is a block diagram of an apparatus for controlling video stream transmission according to some embodiments of this disclosure. As shown in FIG. 20, the apparatus for controlling video stream transmission is used in a video stream server. The apparatus includes:
a pushing module 2001, configured to receive a video stream transmitted by a pushing terminal, and push the video stream to a pulling terminal; and
a receiving module 2002, configured to receive a pulling request transmitted by the pulling terminal, the pulling request carrying a pulling bit rate, and the pulling bit rate being determined based on network indicator information detected during receiving of the video stream by the pulling terminal; and
the pushing module 2001 being further configured to perform pushing processing to the pulling terminal based on the pulling bit rate.

In some embodiments of this disclosure, the receiving module 2002 is further configured to:
receive video streams corresponding to a plurality of pushing bit rates from the pushing terminal; and
the pushing module 2001 is further configured to:
perform, if the matching result indicates that a match is found, pushing processing of the video stream corresponding to the pushing bit rate matching the pulling bit rate.

In some embodiments of this disclosure, the pushing module 2001 is further configured to:
perform, if the matching result indicates that no match is found, a difference operation on each of the pushing bit rates of the plurality of video streams and the pulling bit rate, to obtain a plurality of differences; and
select the video stream corresponding to the pushing bit rate with a smallest difference from the plurality of video streams, and perform pushing processing of the selected video stream.

In some embodiments of this disclosure, the receiving module 2002 is further configured to:
receive the video stream corresponding to the pulling bit rate from the pushing terminal, where the video stream corresponding to the pulling bit rate is pushed by the pushing terminal when receiving the pulling request transmitted by the pulling terminal; and
push the video stream corresponding to the pulling bit rate to the pulling terminal.

The apparatuses provided in the foregoing embodiments and the methods provided in the foregoing embodiments belong to the same idea. Specific operation manners of the modules and the units have been described in detail in the method embodiments.

An embodiment of this disclosure further provides an electronic device, including: one or more processors; and a memory, configured to store one or more programs, the one or more programs, when executed by the one or more processors, causing the electronic device to implement the foregoing method for controlling video stream transmission.

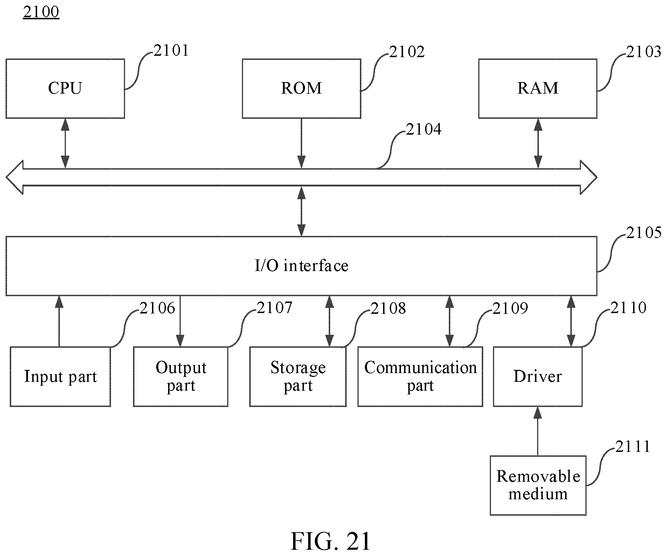

FIG. 21 is a schematic structural diagram of a computer system of an electronic device configured to implement some embodiments of this disclosure.

A computer system 2100 of the electronic device shown in FIG. 21 is merely an example, and does not constitute any limitation on functions and use ranges of some embodiments of this disclosure.

As shown in FIG. 21, the computer system 2100 includes a central processing unit (CPU) 2101, which may perform various suitable actions and processing based on a program stored in a read-only memory (ROM) 2102 or a program loaded from a storage part 2108 into a random access memory (RAM) 2103, for example, perform the method described in the foregoing embodiments. The RAM 2103 further stores various programs and data required for system operations. The CPU 2101, the ROM 2102, and the RAM 2103 are connected to each other through a bus 2104. An input/output (I/O) interface 2105 is also connected to the bus 2104.

The following components are connected to the I/O interface 2105: an input part 2106 including a keyboard, a mouse, and the like; an output part 2107 including a cathode ray tube (CRT), a liquid crystal display (LCD), a speaker, and the like; a storage part 2108 including hard disk, and the like; and a communication part 2109 including a network interface card such as a local area network (LAN) card, a modem, and the like. The communication part 2109 performs communication processing by using a network such as the Internet. A driver 2110 is also connected to the I/O interface 2105 as required. A removable medium 2111, such as a magnetic disk, an optical disc, a magneto-optical disk, or a semiconductor memory, is installed on the driver 2110 as required, so that a computer program read from the removable medium is installed into the storage part 2108 as required.

In particular, according to some embodiments of this disclosure, the processes described above with reference to the flowchart may be implemented as a computer software program. For example, an embodiment of this disclosure includes a computer program product, including a computer program carried on a non-transitory computer-readable medium. The computer program includes a computer program for performing the method shown in the flowchart. In such an embodiment, by using the communication part 2109, the computer program may be downloaded and installed from a network, and/or installed from the removable medium 2111. When the computer program is executed by the CPU 2101, the various functions defined in the system of this disclosure are executed.

The computer-readable medium shown in some embodiments of this disclosure may be a computer-readable signal medium or a computer-readable storage medium or any combination thereof. The computer-readable medium may be, for example, an electrical, magnetic, optical, electromagnetic, infrared, or semiconductor system, apparatus, or device, or any combination thereof. A more specific example of the computer-readable medium may include but is not limited to: an electrical connection having one or more wires, a portable computer magnetic disk, a hard disk, a RAM, a ROM, an erasable programmable read-only memory (EPROM), a flash memory, an optical fiber, a compact disc read-only memory (CD-ROM), an optical storage device, a magnetic storage device, or any appropriate combination thereof. In this disclosure, the computer-readable medium may be any tangible medium containing or storing a program, and the program may be used by or in combination with an instruction execution system, apparatus or component. In this disclosure, the computer-readable signal medium may include a data signal transmitted in a baseband or as part of a carrier, and stores a computer-readable computer program. Such a propagated data signal may be in a plurality of forms, including but not limited to an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The computer program included in the computer-readable medium may be transmitted by using any suitable medium, including but not limited to: a wireless medium, a wire, or the like, or any appropriate combination thereof.

The flowcharts and block diagrams in the accompanying drawings illustrate possible system architectures, functions, and operations that may be implemented by a system, a method, and a computer program product according to various embodiments of this disclosure. Each box in a flowchart or a block diagram may represent a module, a program segment, or a part of code. The module, the program segment, or the part of code includes one or more executable instructions used for implementing specified logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

Related units described in some embodiments of this disclosure may be implemented in a software manner, or may be implemented in a hardware manner, and the unit described can also be set in a processor. Names of these units do not constitute a limitation on the units in a case.

Another aspect of this disclosure further provides a computer-readable medium, having a computer program stored therein, the computer program, when executed by a processor, implementing the foregoing method for controlling video stream transmission. The computer-readable medium may be included in the electronic device described in the foregoing embodiments, or may exist alone and is not disposed in the electronic device.

Another aspect of this disclosure further provides a computer program product or a computer program, including computer instructions, the computer instructions being stored in a computer-readable medium. A processor of a computer device reads the computer instructions from the computer-readable medium and executes the computer instructions, to cause the computer device to perform the method for controlling video stream transmission provided in the foregoing embodiments.

The foregoing descriptions are merely exemplary embodiments of this disclosure, and are not intended to limit the implementations of this disclosure. A person of ordinary skill in the art may conveniently make variations or modifications according to the main idea of this disclosure. Therefore, the protection scope of this disclosure shall be subject to the protection scope of the claims.

## Claims

1. A method for controlling video stream transmission, executable by a pulling terminal, the method comprising:
receiving a video stream transmitted by a pushing party, and detecting network indicator information of the video stream in the receiving process;
determining a pulling bit rate matching the network indicator information based on the network indicator information;
generating a pulling request based on the pulling bit rate, the pulling request being configured for indicating the pushing party to perform pushing processing based on the pulling bit rate; and
transmitting the pulling request to the pushing party.

2. The method according to claim 1, wherein the determining a pulling bit rate matching the network indicator information based on the network indicator information comprises:
determining, based on the network indicator information, quality of a network environment of the pulling terminal; and
determining the pulling bit rate matching the quality of the network environment based on the quality of the network environment, wherein the quality of the network environment is positively correlated with the pulling bit rate.

3. The method according to claim 2, wherein the network indicator information comprises a value of a network indicator; and the determining, based on the network indicator information, quality of a network environment of the pulling terminal comprises:
determining, based on a relationship between the value of the network indicator and a preset indicator threshold, the quality of the network environment of the pulling terminal.

4. The method according to claim 3, wherein the network indicator information comprises a plurality of values of the network indicator; and the determining, based on a relationship between the value of the network indicator and a preset indicator threshold, the quality of the network environment of the pulling terminal comprises:
detecting a relationship between each of the plurality of values of the network indicator and the preset indicator threshold, to obtain a first detection result; and
determining, if the first detection result indicates that the plurality of values comprise a specified quantity of values greater than the preset indicator threshold, that the network environment of the pulling terminal is of first-level quality; or
determining, if the first detection result indicates that the plurality of values do not comprise the specified quantity of values greater than the preset indicator threshold, that the network environment of the pulling terminal is of second-level quality, wherein the first-level quality is lower than the second-level quality.

5. The method according to any one of claims 1 to 4, wherein the network indicator information comprises at least one of delay information or packet loss rate information; and the detecting network indicator information of the video stream in the receiving process comprises:
obtaining, if the network indicator information comprises the delay information, a receiving moment of a data packet corresponding to the video stream, determining a transmission moment of the data packet based on time stamp information carried in the data packet, and determining the delay information of the video stream in the receiving process based on the receiving moment and the transmission moment; and
obtaining, if the network indicator information comprises the packet loss rate information, a received data amount of the data packet corresponding to the video stream, determining a transmitted data amount of the data packet based on a data packet size carried in the data packet, and determining the packet loss rate information of the video stream in the receiving process based on the received data amount and the transmitted data amount.

6. The method according to any one of claims 1 to 4, wherein if the pushing party comprises a pushing terminal, the transmitting the pulling request to the pushing party comprises:
transmitting the pulling request to the pushing terminal, wherein the pulling request is configured for indicating the pushing terminal to perform pushing processing to a video stream server based on the pulling bit rate, and push the video stream to the pulling terminal through the video stream server; and
after the transmitting the pulling request to the pushing party, the method further comprises:
receiving the video stream corresponding to the pulling bit rate from the video stream server.

7. The method according to any one of claims 1 to 4, wherein if the pushing party comprises a video stream server, the transmitting the pulling request to the pushing party comprises:
transmitting the pulling request to the video stream server, wherein the pulling request is configured for indicating the video stream server to perform pushing processing based on the pulling bit rate; and
after the transmitting the pulling request to the pushing party, the method further comprises:
receiving the video stream corresponding to the pulling bit rate from the video stream server.

8. A method for controlling video stream transmission, executable by a pushing terminal, the method comprising:
pushing a video stream to a video stream server, to cause the video stream server to push the video stream to a pulling terminal;
receiving a pulling request transmitted by the pulling terminal, the pulling request carrying a pulling bit rate, and the pulling bit rate being determined based on network indicator information detected during receiving of the video stream by the pulling terminal; and
performing pushing processing to the video stream server based on the pulling bit rate, to cause the video stream server to push the video stream corresponding to the pulling bit rate to the pulling terminal.

9. A method for controlling video stream transmission, executable by a video stream server, the method comprising:
receiving a video stream transmitted by a pushing terminal, and pushing the video stream to a pulling terminal;
receiving a pulling request transmitted by the pulling terminal, the pulling request carrying a pulling bit rate, and the pulling bit rate being determined based on network indicator information detected during receiving of the video stream by the pulling terminal; and
performing pushing processing to the pulling terminal based on the pulling bit rate.

10. The method according to claim 9, wherein the receiving a video stream transmitted by a pushing terminal comprises:
receiving video streams corresponding to a plurality of pushing bit rates from the pushing terminal; and
the performing pushing processing to the pulling terminal based on the pulling bit rate comprises:
matching the pulling bit rate against the pushing bit rates of the plurality of video streams, to obtain a matching result; and
performing, if the matching result indicates that a match is found, pushing processing of the video stream corresponding to the pushing bit rate matching the pulling bit rate.

11. The method according to claim 10, wherein the method further comprises:
performing, if the matching result indicates that no match is found, a difference operation on each of the pushing bit rates of the plurality of video streams and the pulling bit rate, to obtain a plurality of differences; and
selecting the video stream corresponding to the pushing bit rate with a smallest difference from the plurality of video streams, and performing pushing processing of the selected video stream.

12. An apparatus for controlling video stream transmission, comprising:
a receiving module, configured to receive a video stream transmitted by a pushing party, and detect network indicator information of the video stream in the receiving process;
a determining module, configured to determine a pulling bit rate matching the network indicator information based on the network indicator information;
a generation module, configured to generate a pulling request based on the pulling bit rate, the pulling request being configured for indicating the pushing party to perform pushing processing based on the pulling bit rate; and
a transmission module, configured to transmit the pulling request to the pushing party.

13. An apparatus for controlling video stream transmission, comprising:
a pushing module, configured to push a video stream to a video stream server, to cause the video stream server to push the video stream to a pulling terminal; and
a receiving module, configured to receive a pulling request transmitted by the pulling terminal, the pulling request carrying a pulling bit rate, and the pulling bit rate being determined based on network indicator information detected during receiving of the video stream by the pulling terminal; and
the pushing module being further configured to perform pushing processing to the video stream server based on the pulling bit rate, to cause the video stream server to push the video stream corresponding to the pulling bit rate to the pulling terminal.

14. An apparatus for controlling video stream transmission, comprising:
a pushing module, configured to receive a video stream transmitted by a pushing terminal, and push the video stream to a pulling terminal; and
a receiving module, configured to receive a pulling request transmitted by the pulling terminal, the pulling request carrying a pulling bit rate, and the pulling bit rate being determined based on network indicator information detected during receiving of the video stream by the pulling terminal; and
the pushing module being further configured to perform pushing processing to the pulling terminal based on the pulling bit rate.

15. An electronic device, comprising:
one or more processors; and
a memory, configured to store one or more programs, the one or more programs, when executed by the one or more processors, causing the electronic device to implement the method for controlling video stream transmission according to any one of claims 1 to 7, or claim 8, or claims 9 to 11.

16. A computer-readable medium, having a computer program stored therein, the computer program, when executed by a processor, implementing the method for controlling video stream transmission according to any one of claims 1 to 7, or claim 8, or claims 9 to 11.

17. A computer program product, comprising computer instructions, the computer program instructions, when executed by a processor, implementing the method for controlling video stream transmission according to any one of claims 1 to 7, or claim 8, or claims 9 to 11.
